# EUROPEAN PATENT SPECIFICATION

(11) **EP 2 474 140 B1**
(45) Date of publication and mention of the grant of the patent: **01.01.2014**
(21) Application number: 10742490.5
(22) Date of filing: 10.08.2010
(51) Int. Cl.: G06F 21/57, H04L 29/08, H04L 29/06

(54) **CHECKING A CONFIGURATION MODIFICATION FOR AN IED**
ÜBERPRÜFUNG EINER KONFIGURATIONSÄNDERUNG FÜR EINE IED
VÉRIFICATION D'UNE MODIFICATION DE CONFIGURATION D'UN DISPOSITIF ÉLECTRONIQUE INTELLIGENT

(30) Priority: 31.08.2009 EP 09169009
(43) Date of publication of application: 11.07.2012
(73) Proprietor: ABB Technology AG, 8050 Zürich (CH)
(72) Inventor: WIMMER, Wolfgang, 5323 Rietheim (CH)
(74) Representative: ABB Patent Attorneys
(86) International application number: PCT/EP2010/061633
(87) International publication number: WO 2011/023533

(56) References cited:
- EP-A1- 1 940 075
- US-A1- 2009 171 479
- CHEUNG H ET AL: "Two-level network architecture for open-access power systems with distributed generations", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-7, XP031304711, ISBN: 978-1-4244-1905-0
- NIAN LIU ET AL: "Study on PMI based Access Control of Substation Automation System", POWER ENGINEERING SOCIETY GENERAL MEETING, 2006. IEEE MONTREAL, QC, CANADA 18-22 JUNE 2006, PISCATAWAY, NJ, USA,IEEE, PISCATAWAY, NJ, USA, 18 June 2006 (2006-06-18), pages 1-7, XP010943239, ISBN: 978-1-4244-0493-3

## Description

### Technical Field

The invention relates to the field of process control and substation automation systems in general, and to security aspects to be observed during configuration and parameterization of individual devices within these systems in particular.

### Background Art

Process Control (PC) systems in general, and power network protection or Substation Automation (SA) systems in particular, perform mission-critical tasks. If one of the constituents of those systems fails, proper and safe operation of a particular industrial process or electrical power substation may be jeopardized. Exemplary mission-critical system constituents of SA systems include so-called Intelligent Electronic Devices (IED) such as protection relays executing protection functions based on data from sensors and issuing control commands such as circuit breaker trips in response thereto. These IEDs can be accessed either locally or from remote, as nowadays they are connected with other devices in the power network protection system via various communication links, enabling, in addition to local access, monitoring, configuration and parameterization of those IEDs from remote.

At the same time, through the use of TCP/IP-based and other wide area communication means, the IEDs become more exposed to and vulnerable against wrong configuration and parameterization, whether intentional or not. In particular, cyber attacks that have breached the existing IT security layer may be able to activate settings or configurations that are dangerous for a power system and might lead to an instantaneous tripping of some lines or a delayed break down of the power network as a consequence of a subsequent real fault situation. In order to protect mission-critical IEDs against local or remote attacks, a number of technologies have been developed.

A commonly used approach for securing the configuration and setting parameters of an IED relies on access rights, in particular role based access (RBAC) where a certain role is entitled to make certain changes / modifications to the configuration of the mission critical devices. A role with assigned access rights is pre-defined and linked to some special users. Those special users have to identify themselves on the mission critical device by means of a password or some other security certificate, before they are allowed to act according to the role. Another approach is to link the right to modify settings and configurations directly to a user, which in turn has to identify him self by means of a password or certificate, generally referred to as a key in the following. Therefore, by limiting the right of modification to a small number of designated people, protection of PC systems is achieved to some extent.

EP 1940075 describes an exemplary Role Based Access (RBAC) protocol for substation IEDs, with user roles built up from basic permissions, including e.g. the basic permission "Configuration" for a certain aspect, and assigned to multiple users of a same IED. Unique security keys for the users and a unique security file for each IED are generated. A requested action is executed following a positive check of a received user key against a security file confirming permission of the requested action based on the basic permissions of the user's role.

The problem with the above approaches resides in the fact that it neglects the risks due to disgruntled employees knowing the appropriate keys, or due to stolen or misappropriated keys. People within the original security perimeter and having the necessary keys may easily tamper the configuration data. The current solution to this problem is that e.g. the stolen keys or the user identifications and keys of dismissed employees are disabled within the system as fast as possible. However, this is not easy to achieve within a distributed system and may last some time.

Some other approaches are already in use to avoid the situation described above. For example, a "second opinion" or "four eyes" check may be configured on individual IEDs. In this case, an intended configuration modification or parameter change is accepted only if confirmed by two different users that in turn are authenticated based on two different keys. The probability that both keys have been stolen or are lost or belong to disgruntled employees is very low. Hence, a slower and less complex key management procedure may be sufficient.

US 6189032 discloses a client-server system, wherein the server, upon identification of a first user and reception of a service supply request from the first user, determines if an approval by another user is required for providing the service, and obtains such approval by sending an approval request to the another user at a second client terminal.

In this system, the configuration modification proposed by a first user has to wait for a second user's approval. Sometimes, the delay caused by waiting for the second user's approval may be hours, or even days. For configurations that shall be deployed urgently, this is a significant disadvantage.

### Brief Summary of the Invention

It is an object of the present invention to check or verify, in a reliable, secure and delay-free way, intended changes to a configuration or to a parameter setting of an individual IED of a Process Control PC or Substation Automation SA system.

According to one aspect of the present invention, there is provided a method of checking, during regular operation of a PC or SA system, an intended configuration modification for a mission-critical IED of the system. The IED receives, from a requestor, a modification request directed to IED configuration, parameter or setting data. An Identity or role of the requestor is authenticated by the IED itself, based on a first key and in a standard way. The IED then checks the requested configuration modification, and rejects it in case no approval or confirmation is made by an approver independent of the requestor, and accepts and implements it otherwise. The IED authenticates the approver prior to receiving the request, and stores, in a local memory, a configuration modification plausibility check provided by the approver. The latter may either elaborate the check at the IED, via suitable input means, or load the pre-elaborated check in its entirety onto the IED. The stored plausibility check is then performed on, or applied to, the specific circumstances, or attributes, of the request, and the intended modification is rejected or approved depending on the result or outcome of the check. The particular circumstances of the intended modification include one or more of the proposed new configuration settings or parameter values; a time, location, requestor identity or history of the request; or status information about the controlled process and/or the controlling Process Control PC or Substation Automation SA system comprising the IED.

The proposed plausibility check extends beyond a mere authentication of the requestor and his role, and further restricts any role-based permission based on a plausibility check involving the particular circumstances of the request in suit. Authenticating the approver days or hours in advance eliminates any delay that would otherwise incur when waiting for an on-line or real-time approval. Furthermore, the approver authentication resulting in a plausibility check being stored in executable form at the IED itself eliminates the need to repeatedly secure a communication link to a remote approver.

According to a preferred variant of the invention, the plausibility check for judging whether the modified configuration setting is acceptable or not is embodied as a maintenance schedule able to confirm that a configuration or setting change is presently foreseen for the IED, or as a coded set of rules to be executed as a sequence of program steps, or as an expert system which checks the consistency of the intended modification with respect to past and/or present settings of other IEDs and/or the power network, and which past and/or present settings are obtained and stored by the expert system autonomously.

According to another preferred variant of the invention, the plausibility check involves primary information or knowledge about the PC or SA system, or about the controlled process or substation as a whole. The plausibility check does not just rely on an actual status of an individual piece of primary equipment of the substation as in interlocking, and thus extends beyond a mere check for technical consistency.

According to a preferred embodiment of the invention, the plausibility check verifies conformance of the request with one or a combination of the following secondary criteria: when the modified configuration setting is received, where the modified configuration setting is sent from, what kind of IED is concerned, who is the requestor, what kind of modifications are requested, and whether the modified configuration setting is consistent with prior configurations.

### Brief Description of the Drawings

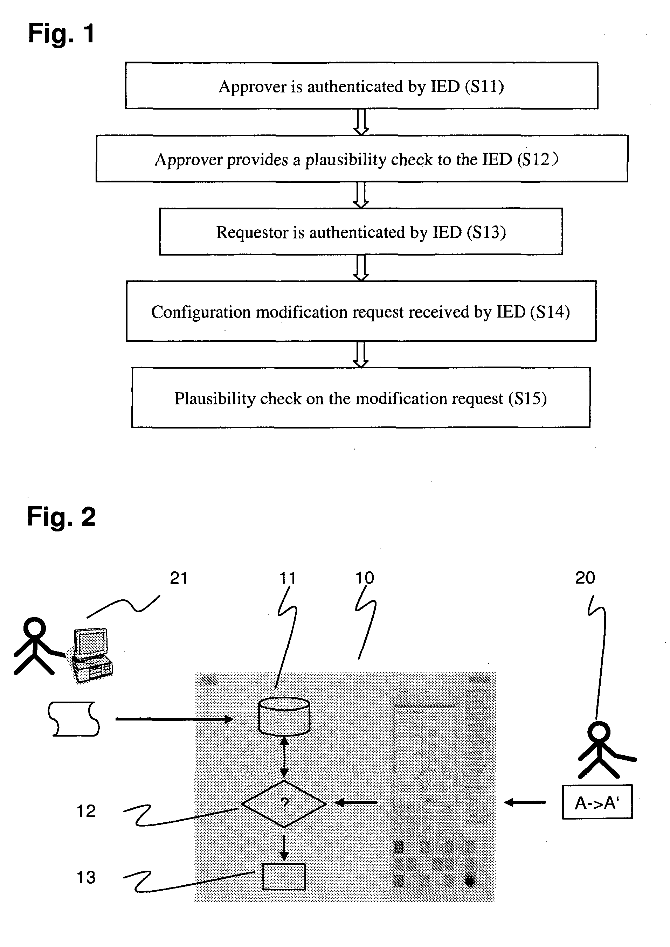

Further embodiments, advantages and applications of the invention are disclosed in the following description and make reference to the accompanying Figs.1 and 2, wherein:
Fig.1 depicts a flowchart of a configuration modification checking method; and
Fig.2 depicts an IED adapted to perform a configuration modification check.

### Preferred Embodiments of the Invention

The proposed configuration checking method involves an approver or second source which pre-authenticates itself on the mission-critical device (IED) to be subsequently re-configured. The IED obtains the second source's approval before accepting a configuration modification request made to the IED by a requestor or first source. The second source identifies itself to the IED by a second key or electronic signature which is different from the key of the first source.

Fig.1 depicts a flowchart illustrating in detail the steps of the plausibility check. The steps are arranged in a chronological order.

In step S11, an approver authenticates itself to the IED by presenting a second key or electronic signature. The IED verifies the second key, and qualifies the approver when the key has successfully passed verification. The approver may be an administrator or operator of a Process Control system or a Substation Automation system, or a processing unit with knowledge about the proper operation of those systems as e.g. instructed by the aforementioned administrator or operator.

In step S12, the authenticated approver uploads a plausibility check to the IED. The IED stores the plausibility check in its memory for subsequent use. The plausibility check can be input by the approver through a Human-Machine Interface (HMI) on the IED. Alternatively, the plausibility check can be transmitted from a remote location by use of available communication links.

In step S13, the requestor logs on to the IED and identifies itself by a first key. Successful verification of the first key authenticates or qualifies the requestor. The first key and second key are different from each other and may even belong to distinct key categories.

In step S14, the authenticated requestor uploads a modified configuration or parameter set to the IED, where it is temporarily stored for immediate plausibility checking.

In step S15, the IED runs the plausibility check provided by the approver for deciding whether the modified configuration or parameter set can be activated or deployed, or whether it has to be rejected. In the latter case, appropriate alarming schemes may be activated instead.

When elaborating the plausibility check, the approver is knowledgeable about the operation of the Process Control system and the role of the IED as a part there of. In other words, the plausibility check is not only focussing on the proper operation of the IED itself, but verifies that the modified configuration is conformant with the Process Control or Substation Automation system as a whole. If the intended configuration modification has any adverse influence on the whole system or any neighbouring critical device, such as an unmotivated trip of a power line, the plausibility check will reject the configuration and prohibit it from being deployed onto the target IED.

The plausibility check may be implemented as a plausibility checking procedure indicating whether the configuration modification is acceptable based on a fixed schedule or a set of rules elaborated by the approver. Alternatively, the plausibility check is performed by a modification checking expert system, which can generate new checking criteria or rules based on an automated learning. The expert system can collect and store dynamic configuration information from all or selected IEDs of the system in an automated manner. The plausibility checking procedure may then compare the modified configuration or parameter set with previous configurations of the target IED, or with previous and present configurations of any other IED of the system.

Furthermore, the checking procedure checks the configuration based on certain secondary criteria. Some exemplary criteria could be: the time elapsed since the last successful configuration modification; the physical location and role of the requestor; the scheduled modification time (e.g. normal working hours?); the type or class of the parameter to be modified; and the value or range of the modified parameter. The checking procedure rejects the modified configuration if it does not meet the above criteria.

The above-listed features of the plausibility checking procedure may be combined arbitrarily, in order to achieve the object of present invention.

The approver does not need to frequently log on to the IED, but may have a regular schedule for maintaining the mission-critical IEDs, and may upload a new version of the plausibility check once the old version is outdated. The updated version of the plausibility check may include new standards of operation, new solutions for coping with problems, or changes in the underlying PC or SA system.

Since the modification plausibility check is stored in the IED, it is possible to approve or reject the modification request while the approver is off-line. A secure communication link needs to be established only when the plausibility check is updated. Moreover, since the checking procedure is already stored in the IED before receiving any modification request, it is not necessary to wait for the approver to log on and make a decision. Therefore, the time delay introduced by the checking procedure is minimized.

Fig.2 depicts an Intelligent Electronic Device (10) with a memory means (11) for storing a configuration modification plausibility check, and a configuration modification plausibility checking unit (12) for approving or rejecting a configuration modification based on the stored plausibility check. The IED is adapted to receive, from an authenticated approver (21), a schedule, rules or a expert system as the configuration modification plausibility check to be stored in the memory. A request is then received from a requestor (20), and if accepted the former is retained in a modified configuration table (13) of the IED.

### List of reference symbols

- 10: IED
- 11: memory means
- 12: plausibility checking unit
- 13: IED configuration
- 20: requestor
- 21: approver

## Claims

1. A method of checking a configuration modification for an Intelligent Electronic Device IED (10) in a Process Control PC or Substation Automation SA system, the method comprising:
- receiving, by the IED, a configuration modification request from a requestor (20),
- authenticating a role of the requestor, and
- approving or rejecting, by the IED, the configuration modification request based on an approval from an approver (21) independent of the requestor,
**characterized in that** the method comprises
- authenticating, by the IED and prior to receiving the request, the approver and storing, in a memory (11) of the IED, a configuration modification plausibility check elaborated by the approver, and
- approving or rejecting the configuration modification request based on a result of the stored plausibility check when applied to specific circumstances of the configuration modification request.

2. The method according to claim 1, **characterized in that** the plausibility check includes a maintenance schedule for the IED, or a set of rules, or an expert system, for judging whether the configuration modification is acceptable.

3. The method according to claim 1 or 2, **characterized in that** the circumstances of the request involve primary information about the PC or SA system, or primary information about a process or substation controlled or automated by the system.

4. The method according to claim 1 or 2, **characterized in that** the circumstances of the request involve one or several of the following:
- time of reception, or time of becoming effective, of the modified configuration,
- place of the requestor,
- type of the IED targeted or type of the modification requested,
- consistency with prior configurations of the IED,
- intended configuration settings or parameter values.

5. An Intelligent Electronic Device IED (10) in a Process Control PC or Substation Automation SA system, with a device functionality configurable during operation of the system and adapted to
- authenticate a role of a requestor (20), and receive a configuration modification request from the authenticated requestor,
- authenticate an approver (21) independent of the requestor (20), and approve or reject the configuration modification request based on an approval from the approver, **characterized in that** the IED comprises
- memory means (11) for storing a configuration modification plausibility check provided by the authenticated approver prior to receiving the request, and
- an approving unit (12) for approving or rejecting the configuration modification request based on the stored plausibility check and specific circumstances of the configuration modification request.

6. The IED according to claim 5, **characterized in that** the circumstances of the request involve primary information about the PC or SA system of which the IED is part, or primary information about a process or substation controlled or automated by the system.

7. The IED according to claim 5, **characterized in that** the circumstances of the request involve one or several of the following:
- time of reception, or time of becoming effective, of the modified configuration,
- place of the requestor,
- type of the IED targeted or type of the modification requested,
- consistency with prior configurations of the IED,
- intended configuration settings or parameter values.

## Patentansprüche

1. Verfahren zum Überprüfen einer Konfigurationsänderung für eine intelligente elektronische Vorrichtung IED (10) in einem Prozesssteuerungs- oder Schaltanlagen-Automatisierungs-System (PC- oder SA-System), wobei das Verfahren Folgendes umfasst:
- Empfangen einer Konfigurationsänderungsanforderung von einem Anforderer (20) durch die IED,
- Authentifizieren einer Rolle des Anforderers, und
- Genehmigen oder Ablehnen der Konfigurationsänderungsanforderung aufgrund einer Genehmigung durch einen von dem Anforderer unabhängigen Genehmiger (21) durch die IED
**dadurch gekennzeichnet, dass** das Verfahren Folgendes umfasst
- Authentifizieren des Genehmigers und Speichern einer Konfigurationsänderungsplausibilitätsüberprüfung, die durch den Genehmiger ausgearbeitet wurde, in einem Speicher (11) der IED durch die IED und vor Empfangen der Anforderung und
- Genehmigen oder Ablehnen der Konfigurationsänderungsanforderung aufgrund eines Ergebnisses der gespeicherten Plausibilitätsüberprüfung, wenn diese auf die bestimmten Umstände der Konfigurationsänderungsanforderung angewendet wird.

2. Verfahren nach Anspruch 1, **dadurch gekennzeichnet, dass** die Plausibilitätsüberprüfung eine Wartungsplanung für die IED oder eine Gruppe von Regeln oder ein Expertensystem zum Beurteilen, ob die Konfigurationsänderung annehmbar ist, enthält.

3. Verfahren nach Anspruch 1 oder 2, **dadurch gekennzeichnet, dass** die Umstände der Anforderung primäre Informationen über das PC- oder das SA-System oder primäre Informationen über einen Prozess oder eine durch das System gesteuerte oder automatisierte Schaltanlage beinhalten.

4. Verfahren nach Anspruch 1 oder 2, **dadurch gekennzeichnet, dass** die Umstände beinhalten:
- Zeit des Empfangs oder Zeit des Wirksamwerdens der geänderten Konfiguration
- Ort des Anforderers
- Art der angesteuerten IED oder Art der angefragten Änderung,
- Kontinuität mit vorherigen Konfigurationen der IED,
- beabsichtigte Konfigurationseinstellungen oder Parameterwerte.

5. Intelligente elektronische Vorrichtung IED (10) in einem Prozesssteuerungs- oder SchaltanlagenAutomatisierungs-System (PC- oder SA-System) mit einer Vorrichtungsfunktionalität, die während des Betriebs des Systems konfigurierbar ist und ausgelegt ist,
- eine Rolle eines Anforderers (20) zu authentifizieren und eine Konfigurationsänderungsanforderung von dem authentifizierten Anforderer zu empfangen,
- einen von dem Anforderer (20) unabhängigen Genehmiger (21) zu authentifizieren und die Konfigurationsänderungsanforderung aufgrund einer Genehmigung von dem Genehmiger zu genehmigen oder abzulehnen, **dadurch gekennzeichnet, dass** die IED Folgendes umfasst
- Speichermittel (11) zum Speichern einer Konfigurationsänderungsplausibilitätsüberprüfung, die durch den authentifizierten Genehmiger vor dem Empfang der Anforderung geliefert wurde, und
- eine Genehmigungseinheit (12) zum Genehmigen oder Ablehnen der Konfigurationsänderungsanforderung aufgrund der gespeicherten Plausibilitätsüberprüfung und bestimmten Umständen der Konfigurationsänderungsanforderung.

6. IED nach Anspruch 5, **dadurch gekennzeichnet, dass** die Umstände der Anforderung primäre Informationen über das PC- oder das SA-System, von dem die IED ein Teil ist, oder primäre Informationen über einen Prozess oder eine Schaltanlage, der bzw. die durch das System gesteuert oder automatisiert wird, beinhalten.

7. IED nach Anspruch 5, **dadurch gekennzeichnet, dass** die Umstände der Anforderung eines oder mehrere der Folgenden beinhalten:
- Zeit des Empfangs oder Zeit des Wirksamwerdens der geänderten Konfiguration
- Ort des Anforderers
- Art der angesteuerten IED oder Art der angefragten Änderung
- Kontinuität mit vorherigen Konfigurationen der IED
- beabsichtigte Konfigurationseinstellungen oder Parameterwerte.

## Revendications

1. Procédé pour vérifier une modification de configuration pour un dispositif électronique intelligent, dit IED, (10) dans un système de commande de processus, dite PC, ou d'automatisation de postes, dite SA, le procédé comprenant les étapes consistant à :
- recevoir, par l'IED, une demande de modification de configuration émanant d'un demandeur (20),
- authentifier un rôle du demandeur, et
- approuver ou rejeter, par l'IED, la demande de modification de configuration sur la base d'une approbation émanant d'un approbateur (21) indépendant du demandeur,
le procédé étant **caractérisé en ce qu'**il comprend les étapes consistant à
- authentifier, par l'IED et préalablement à la réception de la demande, l'approbateur et enregistrer, dans une mémoire (11) de l'IED, une vérification de plausibilité de modification de configuration élaborée par l'approbateur, et
- approuver ou rejeter la demande de modification de configuration sur la base d'un résultat de la vérification de plausibilité enregistrée lorsqu'elle est appliquée à des circonstances particulières de la demande de modification de configuration.

2. Procédé selon la revendication 1, **caractérisé en ce que** la vérification de plausibilité comporte un calendrier d'entretien pour l'IED, ou un jeu de règles, ou un système expert, pour évaluer si la modification de configuration est acceptable.

3. Procédé selon la revendication 1 ou 2, **caractérisé en ce que** les circonstances de la demande mettent en jeu des informations primaires concernant le système de PC ou de SA, ou des informations primaires concernant un processus ou un poste commandé ou automatisé par le système.

4. Procédé selon la revendication 1 ou 2, **caractérisé en ce que** les circonstances de la demande mettent en jeu au moins un des éléments suivants :
- l'heure de réception de la configuration modifiée ou l'heure de son entrée en vigueur,
- l'emplacement du demandeur,
- le type de l'IED ciblé ou le type de la modification demandée,
- la cohérence avec des configurations préalables de l'IED,
- des réglages ou des valeurs de paramètres de configuration voulus.

5. Dispositif électronique intelligent, dit IED, (10) dans un système de commande de processus, dite PC, ou d'automatisation de postes, dite SA, doté d'une fonctionnalité de dispositif configurable durant l'exploitation du système et conçu pour :
- authentifier un rôle d'un demandeur (20), et recevoir une demande de modification de configuration émanant du demandeur authentifié,
- authentifier un approbateur (21) indépendant du demandeur (20), et approuver ou rejeter la demande de modification de configuration sur la base d'une approbation émanant de l'approbateur,
l'IED étant **caractérisé en ce qu'**il comprend
- un moyen formant mémoire (11) servant à enregistrer une vérification de plausibilité de modification de configuration fournie par l'approbateur authentifié préalablement à la réception de la demande,
et
- une unité d'approbation (12) servant à approuver ou rejeter la demande de modification de configuration sur la base de la vérification de plausibilité enregistrée et de circonstances particulières de la demande de modification de configuration.

6. IED selon la revendication 5, **caractérisé en ce que** les circonstances de la demande mettent en jeu des informations primaires concernant le système de PC ou de SA dont l'IED fait partie, ou des informations primaires concernant un processus ou un poste commandé ou automatisé par le système.

7. IED selon la revendication 5, **caractérisé en ce que** les circonstances de la demande mettent en jeu au moins un des éléments suivants :
- l'heure de réception de la configuration modifiée ou l'heure de son entrée en vigueur,
- l'emplacement du demandeur,
- le type de l'IED ciblé ou le type de la modification demandée,
- la cohérence avec des configurations préalables de l'IED,
- des réglages ou des valeurs de paramètres de configuration voulus.
